# EUROPÄISCHE PATENTSCHRIFT

(11) **EP 1 131 222 B1**
(45) Veröffentlichungstag und Bekanntmachung des Hinweises auf die Patenterteilung: **23.10.2002**
(21) Anmeldenummer: 99956011.3
(22) Anmeldetag: 18.11.1999
(51) Int. Cl.: B60K 15/04, B60K 15/05

(54) **VERSCHLUSS FÜR EINEN KRAFTSTOFFBEHÄLTER EINES KRAFTFAHRZEUGS**
CLOSURE FOR A REFUELING TANK OF A MOTOR VEHICLE
BOUCHON POUR LE RESERVOIR A CARBURANT D'UN VEHICULE AUTOMOBILE

(30) Priorität: 18.11.1998 DE 19853157; 07.07.1999 DE 19931177
(43) Veröffentlichungstag der Anmeldung: 12.09.2001
(60) Teilanmeldung: 01130608.1
(73) Patentinhaber: REUTTER, Heinrich, 71336 Waiblingen-Hohenacker (DE)
(72) Erfinder: REUTTER, Heinrich, 71336 Waiblingen-Hohenacker (DE)
(74) Vertreter: Fuhlendorf, Jörn, Dipl.-Ing.
(86) Internationale Anmeldenummer: EP9908848
(87) Internationale Veröffentlichungsnummer: WO00029239

(56) Entgegenhaltungen:
- US-A- 3 126 728
- US-A- 5 385 256
- US-A- 5 732 842

## Beschreibung

Die vorliegende Erfindung bezieht sich auf einen Verschluss für einen Kraftstoffbehälter eines Kraftfahrzeugs nach dem Oberbegriff des Anspruchs 1.

Bekannte Verschlüsse für Kraftstoffbehälter eines Kraftfahrzeugs werden durch eine einsteckende und drehende Bewegung entweder über einen Schraubverschluss oder über einen Bajonettverschluss mit dem Einfüllstutzen verbunden. Derartige Verschlussbewegungen sind für automatische Betankungsanlagen relativ umständlich und aufwendig.

Bei einem aus der US-A-3 126 728 bekannten Verschluss für Kraftstoffbehälter eines Kraftfahrzeugs der eingangs genannten Art ist das Anlageelement als boomerangförmiger Riegel ausgebildet, der entgegen der Wirkung einer Druckfeder schwenkbar verriegelnd gehalten ist. Das Lösen der Verriegelung ist mit Hilfe einer Betätigung erreicht, die entweder axial beweglich und verdrehbar oder nur verdrehbar ist und die mittels Nocken bzw. Nockenkurven mit den Riegeln in Wirkverbindung treten.

Aufgabe der vorliegenden Erfindung ist es, einen Verschluss für einen Kraftstoffbehälter eines Kraftfahrzeugs der eingangs genannten Art zu schaffen, bei dem der Verschlussdeckel in bewegungsmäßig einfacherer Weise am Einfüllstutzen axial festlegbar ist.

Zur Lösung dieser Aufgabe sind bei einem Verschluss für einen Kraftstoffbehälter eines Kraftfahrzeugs der eingangs genannten Art die im Anspruch 1 angegebenen Merkmale vorgesehen.

Durch die erfindungsgemäßen Maßnahmen ist erreicht, dass von der Einsteckbewegung des Einsteckteils in den Einfüllstutzen die festlegende Bewegung des Anlageelements im Einfüllstutzen abgeleitet ist. Dadurch ist bspw. roboterseitig nur eine einfache Bewegung erforderlich, um den Verschlussdeckel im Einfüllstutzen einzubringen und festzulegen bzw. zu lösen und auszubringen. Dabei ist das Anlageelement eine Schenkelfeder, deren Schwenkbewegung sich von der axialen Bewegung eines Schiebers ableitet. Mit anderen Worten, mit der Einsteckbewegung des Einsteckteils wird die Schenkelfeder derart gespannt, dass sich ihr einer Schenkel gegen eine Unterkante des Einfüllstutzens und ihr anderer Schenkel gegen die Außenseite des Stößels anlegt. Auf diese Weise wird der Deckelteil, der mit der Schwenkachse der Schenkelfeder starr verbunden ist, nach unten und gegen die Sitzfläche des Einfüllstutzens aktiv gedrückt. Das axiale Ausfahren des Stößels aus dem Einsteckteil bewirkt eine Mitnahme des zweiten Federschenkels der Schenkelfeder und damit eine Schwenkbewegung der Schenkelfeder, die sich auf diese Weise vom Einfüllstutzen löst. Da sich dann die Schenkelfeder innerhalb des Einsteckteils befindet, kann der gesamte Verschlussdeckel aus dem Einfüllstutzen gebracht werden.

Vorteilhafte Ausgestaltungen ergeben sich dann, wenn die Merkmale gemäß einem oder mehreren der Ansprüche 2 bis 9 vorgesehen sind.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:

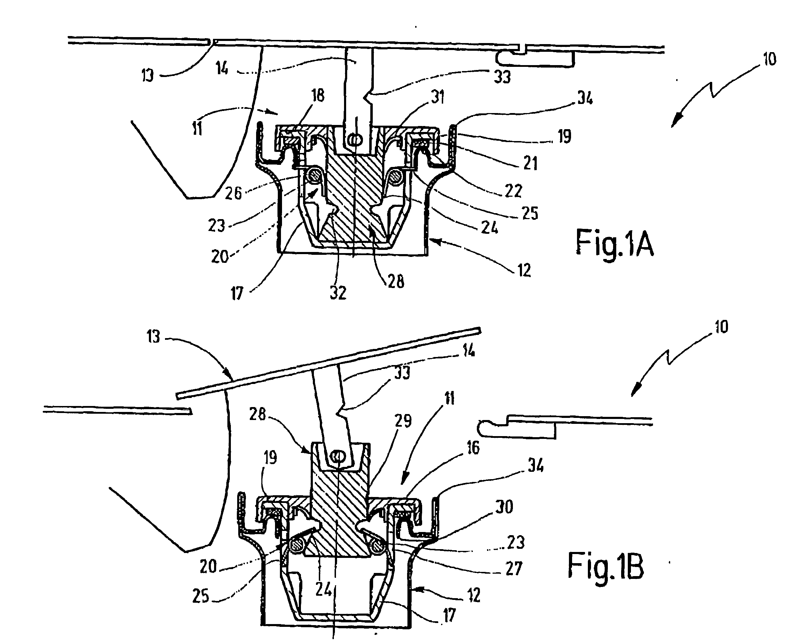

- Figuren 1A und 1B: einen Verschluss für einen Kraftstoffbehälter eines Kraftfahrzeugs gemäß einem bevorzugten Ausführungsbeispiel vorliegender Erfindung, in zwei unterschiedlichen Stellungen.

Der in der Zeichnung gemäß einem Ausführungsbeispiel dargestellte Verschluss 10 für einen Kraftstoffbehälter eines Kraftfahrzeugs ist insbesondere für die automatische Betankung ausgebildet, wofür ein vereinfachter Bewegungsablauf beim Ein- und Ausbringen eines im Wesentlichen zylindrischen Verschlussdeckels 11 in bzw. aus dem Einfüllstutzen 12 des Kraftstoffbehälters und zum flüssigkeitsund gasdichten sowie crashfesten Verschließen und wieder Lösen des Verschlussdeckels mit dem bzw. von dem Einfüllstutzen erreicht und gewährleistet ist. Diese vereinfachte Schließ- und Öffnungsbewegung reduziert sich auf eine im Wesentlichen reine translatorische Bewegung des Verschlussdeckels in den bzw. aus dem Einfüllstutzen. In bevorzugter Weise ist für eine weitere Vereinfachung der automatischen Betankung eine Bewegungsverbindung 14 zwischen dem Verschlussdeckel 11 und einer einen Teil der Karosserie des Kraftfahrzeugs bildenden Klappe 13 hergestellt, von deren Schwenkbewegung die translatorische Bewegung des Verschlussdeckels abgeleitet ist. Diese Verbindung kann, wie in der Zeichnung vereinfacht dargestellt, eine mechanische Verbindung 14 sein, sie kann aber auch durch eine elektromotorische, pneumatische o.dgl. Verbindung erreicht werden.

Gemäß den Figuren 1A und 1B besitzt der Verschlussdeckel 11 des Verschlusses 10 einen ebenen Deckelteil 16, der mit einem durchmesserkleineren Einsteckteil 17 fest verbunden ist. Der Deckelteil 16 besitzt an seiner Unterseite eine Ringnut 18, in der der obere umgebogene Rand des Einsteckteils 17 fest gehalten bspw. eingeklemmt ist, und an welchem umgebogenen Rand 19 ein ebener Dichtungsring 21 eingelegt ist, mit welchem der Verschlussdeckel 11 auf einer Stutzenauflage 22 des Einfüllstutzens 12 dicht aufliegt. Im gehäuseartig ausgebildeten zylindrischen Einsteckteil 17, dessen vorderes Ende konisch verläuft, ist ein Anlage- und Verriegelungselement 20 in Form von hier vier paarweise diagonal einander gegenüberliegende Schenkelfedern 23 schwenkbar gehalten. Die Schenkelfedern 23 sind an starr am Einsteckteil 17 gehaltenen Zapfen 26 derart schwenkbar gelagert, dass ihr erster Federschenkel 24 zur Innenseite des Einsteckteils 17 und ihr zweiter Federschenkel 25 durch einen seitlichen axialen Schlitz 27 hindurch gerichtet ist oder innerhalb des Schlitzes 27 liegt.

Der Verschlussdeckel 11 besitzt des Weiteren einen Stößel 28, der durch den Deckelteil 16 hindurch innerhalb des Einsteckteils 17 axial bewegbar ist. Der Stößel 28 durchdringt eine zentrische Bohrung 29 im Deckelteil 16, gegenüber welchem der Stößel 28 über einen inneren Dichtring 31 abgedichtet ist. Der Stößel 28 besitzt an seinem innerhalb des Einsteckteils 17 angeordneten vorderen Endbereich eine umlaufende Nut 32, die sich zum Außenumfang des Stößels 28 hin konisch öffnet und in die der erste Federschenkel 24 der Schenkelfeder 23 eindringen kann.

Der Stößel 28 ist an seinem anderen außerhalb des Einsteckteils 17 sich befindenden Ende mit dem einen Ende einer hier nur schematisch dargestellten mechanischen Kopplung 14 verbunden, deren anderes Ende an der Klappe 13 angelenkt ist. Die mechanische Kopplung 14 besitzt eine Sollbruchstelle 33, die im Falle eines Crashs die Verbindung zwischen Stößel 28 und damit Verschlussdeckel 11 und Klappe 13 trennt. Bei diesem Ausführungsbeispiel ist der Einfüllstutzen 12 konzentrisch um seine Stutzenauflage 22 mit einem Stabilisierungsrand 34 versehen, der mindestens bis in die Höhe der Außenebene des Deckelteils 16 ragt, so dass bei einem Crash der Verschlussdeckel 11 geschützt ist.

Das Ein- und Ausbringen des Verschlussdeckels 11 in bzw. aus dem Einfüllstutzen 12 geht folgendermaßen vor sich: Figur 1A zeigt die geschlossene bzw. Verschlussstellung, in der der Stößel 28 vollständig in den Einsteckteil 17 eingeschoben ist und in dem die Schenkelfedern 23 des Anlage- und Verriegelungselementes 20 mit ihrem zweiten Federschenkel 25 am Außenumfang des Stößels 28 oberhalb der umlaufenden Nut 32 und der erste Federschenkel 24 an der unteren Ringkante 30 der Stutzenauflage 22 vorgespannt anliegen. Dadurch ist über die Schenkelfedern 23 das Einsteckteil 17 nach unten gezogen, so dass der Verschlussdeckel mit seinem ebenen Dichtungsring 21 aktiv angedrückt auf der Stutzenauflage 22 liegt. Diese aktive Anlage ist auch dann noch vorhanden, wenn bspw. bei einem Crash die Sollbruchsstelle 33 der mechanischen Kopplung 14 durchtrennt wird. Ein Lösen des Verschlussdeckels 11 vom Einfüllstutzen 12 erfolgt durch öffnen der Klappe 13 oder durch entsprechendes Herausziehen des Verschlussdeckels 11 von Hand, so dass gemäß Figur 1B der zweite Federschenkel 25 der Schenkelfedern 23 in dem Bereich der umlaufenden Nut 32 gelangen und aufgrund seiner Vorspannung in die umlaufende Nut 32 eindringen, so dass die Schenkelfedern 23 gemäß den Pfeilen A bzw. A' gegeneinander verschwenken und damit die ersten Federschenkel 24 vom Einfüllstutzen 12 freikommen und in die Schlitze 27 gelangen. Dadurch kann nach diesem Löseschritt in einem weiteren Schritt der Verschlussdeckel 11 aus dem Einfüllstutzen 12 herausgezogen werden, da der Stößel 28 mit seinem unteren konischen Ende an die Schwenkzapfen 26 bzw. die Schenkelfedern 23 gelangt und damit eine formschlüssige Verbindung mit dem Einsteckteil 17 eingeht.

Bei der Einführbewegung des Verschlussdeckels 11 in den Einfüllstutzen 12 wird nach der Auflage des Deckelteils 16 auf dem Einfüllstutzen 12 der Stößel 28 innerhalb des Einsteckteils 17 axial weiterbewegt, wodurch sich aufgrund des Eingreifens der zweiten Federschenkel 25 in die umlaufende Nut 32 die Federschenkel 23 wieder in Gegenrichtung verschwenken und die in Figur 1A dargestellte Lage einnehmen.

## Patentansprüche

1. Verschluss (10) für einen Kraftstoffbehälter eines Kraftfahrzeugs, mit einem an einem Einfüllstutzen (12) flüssigkeits- und gasdicht befestigbaren Verschlussdeckel (11), dessen oberer Deckelteil (16) über eine mit einer Flachdichtung (21) bestückten ringförmigen Dichtfläche an einer Stutzenauflage (22) des Einfüllstutzens liegt und dessen am Deckelteil axial vorstehendes Einsteckteil (17) am Einfüllstutzen (12) in axialer Richtung festlegbar ist, wobei das Einsteckteil (17) mit einem Anlageelement (20) versehen ist, das gegenüber einer Hinterschneidung oder -formung des Einfüllstutzens (12) am Einsteckteil (17) schwenkbar gehalten ist, **dadurch gekennzeichnet, dass** das Anlageelement (20) durch über den Umfang vorzugsweise gleichmäßig verteilt angeordnete Schenkelfedern (23) gebildet ist, deren einer Federschenkel (24) sich an einer Unterkante (30) des Einfüllstutzens (12) und deren anderer Federschenkel (25) sich am Einsteckteil (17) anlegt.

2. Vorrichtung nach Anspruch 1, **dadurch gekennzeichnet, dass** das Einsteckteil (17) als Gehäuse ausgebildet ist, in dem ein Stößel (28) axial bewegbar aufgenommen ist und dass die Schenkelfeder (23) im entspannten Zustand mit ihrem anderen Federschenkel (25) in einer radialen Öffnung (27) des Gehäuses (17) und ihr einer Federschenkel (26)in einer Ausnehmung (32) des Stößels (28) angeordnet ist.

3. Verschluss nach Anspruch 2, **dadurch gekennzeichnet, dass** die Schenkelfeder (23) innerhalb des Gehäuses (17) schwenkbar gehalten ist.

4. Verschluss nach Anspruch 2, **dadurch gekennzeichnet, dass** bei axialer Öffnungsbewegung des Stößels (28) der eine Federschenkel (24) der Schenkelfeder (23) in die Ausnehmung (32) des Stößels (28) entspannend eindringt und die Schwenkbewegung der Schenkelfeder (23) einleitet.

5. Verschluss nach mindestens einem der Ansprüche 2 bis 4, **dadurch gekennzeichnet, dass** der Stößel (28) im Deckelteil (16) geführt und an dessen Innenseite abgedichtet ist.

6. Verschluss nach mindestens einem der vorhergehenden Ansprüche, **dadurch gekennzeichnet, dass** der Umfangsrand des Deckelteils (16) innerhalb eines die Auflage des Einfüllstutzens (17) umgebenden und überragenden Stabilisierungsrandes (34) des Einfüllstutzen angeordnet ist.

7. Verschluss, mit einer den Einfüllstutzen karosserieseitig überdeckenden Klappe, nach mindestens einem der vorhergehenden Ansprüche, **dadurch gekennzeichnet, dass** der Verschlussdeckel (11) mit der Klappe (13) bewegungsmäßig verbunden ist.

8. Verschluss nach Anspruch 7, **dadurch gekennzeichnet, dass** der Verschlussdeckel (11) mit der Klappe (13) über ein Hebelgestänge (14) verbunden ist.

9. Verschluss nach Anspruch 8, **dadurch gekennzeichnet, dass** das Hebelgestänge (14) eine Sollbruchstelle (33) aufweist.

## Claims

1. A closure (10) for a fuel tank of a motor vehicle having a closure cap (11) that can be attached in a liquid-tight and gas-tight manner to a filler pipe (12), the upper part (16) of said cap being in contact with a seating surface (22) of the filler pipe via an annular sealing surface fitted with a flat seal (21), and having on the cap part an axially projecting insertion part (17) that is securely fastenable in an axial direction on the filler pipe (12), the said insertion part (17) being provided with a contacting element (20) that is pivotably mounted on the insertion part (17) relative to an undercut or counter-profile in the filler pipe (12), **characterized in that** the contacting element (20) is formed by leg springs (23) preferably uniformly distributed over the circumference, the one spring leg (24) being in contact with a lower edge (30) of the filler pipe (12), and the other spring leg (25) being in contact with the insertion part (17).

2. A device according to claim 1, **characterized in that** the insertion part (17) has the form of a housing in which is accommodated an axially movable plunger (28), and that in the untensioned state the leg spring (23) is arranged with its other leg (25) in a radial opening (27) in the housing (17) and one of its legs (26) in a recess (32) in the plunger (28).

3. A closure according to claim 2, **characterized in that** the leg spring (23) is pivotably mounted in the housing (17).

4. A closure according to claim 2, **characterized in that** when the plunger (28) executes an axial opening movement, one leg (24) of the leg spring (23) loses its tension and moves into the recess (32) of the plunger (28) and initiates the pivoting movement of the leg spring (23).

5. A closure according to at least one of the claims 2 to 4, **characterized in that** the plunger (28) is guided in the cap part (16) and is sealed at the inside thereof.

6. A closure according to at least one of the preceding claims, **characterized in that** the circumferential edge of the cap part (16) is arranged within a stabilizing edge (34) of the filler pipe, said stabilizing edge surrounding and projecting above the seating surface of the filler pipe (17).

7. A closure, with a bodywork flap covering the filler pipe, according to at least one of the preceding claims, **characterized in that** the closure cap (11) is movably connected with the flap (13).

8. A closure according to claim 7, **characterized in that** the closure cap (11) is connected with the flap (13) via a lever linkage (14).

9. A closure according to claim 8, **characterized in that** the lever linkage (14) possesses a predetermined breaking point (33).

## Revendications

1. Fermeture (10) pour un réservoir à carburant d'un véhicule, avec un couvercle de fermeture (11) que l'on peut fixer à une manche de remplissage (12) de manière à être imperméable aux liquides et gaz, et dont la partie supérieure de couvercle (16) se trouve au dessus d'une portée de joint en forme d'anneau équipée d'un joint plat (21) sur un raccord (22) de la manche de remplissage et dont l'emmanchement (17) axial sur la partie de couvercle peut être fixé à la manche de remplissage (12) dans une direction axiale, l'emmanchement (17) étant pourvu d'un élément de contact (20) qui est fixé sur l'emmanchement (17) de manière a pouvoir pivoter relativement à une rétreinte de la manche de remplissage (12) obtenue par enlèvement ou moulage, **caractérisé en ce que** l'élément de contact (20) est fait de ressorts à branches (23) réparti de préférence uniformément sur la circonférence, une branche de ressort (24) des ressorts à branche étant en contact avec le bord inférieur (30) de la manche de remplissage (12) et l'autre branche de ressort (25) étant en contact avec l'emmanchement (17).

2. Fermeture selon la revendication 1, **caractérisé en ce que** l'emmanchement (17) a la forme d'un boîtier dans laquelle est abritée un coulisseau (28) qui peut se déplacer axialement et que dans une position de détente, le ressort à branches (23) est placé avec son autre branche de ressort (25) dans une ouverture radiale (27) du boîtier (17) et une de ses branches de ressort (26) dans un espace (32) du coulisseau (28).

3. Fermeture selon la revendication 2, **caractérisée en ce que** le ressort à branches (23) est fixé de manière à pivoter à l'intérieur du boîtier (17).

4. Fermeture selon la revendication 2, **caractérisée en ce que**, quand le coulisseau (28) réalise un mouvement axial d'ouverture, une branche (24) du ressort à branches (23) pénètre dans l'espace (32) du coulisseau (28) en se détendant et engage le mouvement de rotation du ressort à branches (23).

5. Fermeture selon au moins l'une des revendications 2 à 4, **caractérisée en ce que** le coulisseau est guidé dans la partie de couvercle (16) et est étanché dans sa partie intérieure.

6. Fermeture selon au moins l'une des revendications précédentes, **caractérisée en ce que** la paroi circonférentielle de la partie de couvercle (16) est disposé à l'intérieur d'une paroi de stabilisation (34) entourant et dépassant la partie d'appui de la manche de remplissage (17).

7. Fermeture avec un couvercle rabattant recouvrant la manche de remplissage du côté de la carrosserie selon au moins l'une des revendications précédentes, **caractérisée en ce que** le couvercle de fermeture (11) est lié dans son mouvement au couvercle rabattant (13).

8. Fermeture selon la revendication 7, **caractérisée en ce que** le couvercle de fermeture (11) est lié au couvercle rabattant (13) par un mécanisme à levier (14).

9. Fermeture selon la revendication 8, **caractérisé en ce que** le mécanisme à levier (14) présente une section de rupture (33) prédéterminée.
